Europäisches Patentamt

European Patent Office

Office européen des brevets

(11) Publication number: **0 099 686**
**B1**

(12) **EUROPEAN PATENT SPECIFICATION**

(45) Date of publication of patent specification: **20.09.89**

(21) Application number: **83303855.7**

(22) Date of filing: **01.07.83**

(51) Int. Cl.⁴: **B 01 D 13/04,** D 01 D 5/24

(54) **Process for preparing polypiperazinamide anisotropic membranes.**

(30) Priority: **01.07.82 IT 2217982**

(43) Date of publication of application:
**01.02.84 Bulletin 84/05**

(45) Publication of the grant of the patent:
**20.09.89 Bulletin 89/38**

(84) Designated Contracting States:
**BE DE FR GB NL**

(56) References cited:
**FR-A-2 166 115**
**US-A-3 615 024**
**US-A-3 687 842**
**DESALINATION, vol. 16, 1975, pages 179-203,**
**Elsevier Scientific Publishing Company,**
**Amsterdam, NL; H. STRATHMANN et al.: "The**
**formation mechanism of asymmetric**
**membranes"**

(73) Proprietor: **Montedison S.p.A.**
**31, Foro Buonaparte**
**I-20121 Milan (IT)**

(72) Inventor: **Bastioli, Catia**
**10/B, via Morbio**
**Novara (IT)**
Inventor: **Gianotti, Giuseppe**
**9, via Palladio**
**Novara (IT)**
Inventor: **Mattera, Adriano**
**13, via Tadini**
**Novara (IT)**
Inventor: **Parrini, Paolo**
**33, V.le Volta**
**Novara (IT)**

(74) Representative: **Whalley, Kevin et al**
**MARKS & CLERK 57/60 Lincoln's Inn Fields**
**London WC2A 3LS (GB)**

Courier Press, Leamington Spa, England.

## Description

The present invention relates to a process for preparing polypiperazinamide anisotropic shaped articles in the form of flat, tubular or hollow fibre membranes, suitably for ultrafiltration and for reverse osmosis.

By the term "polypiperazinamides" as used in this specification, there are meant all polycondensed products of piperazine or alkyl-substituted piperazines, optionally in admixture with other diamines, with anhydrides or dichlorides of saturated or unsaturated aliphatic, aromatic or heterocyclic di-carboxylic acids, such as fumaric acid, mesaconic acid, adipic acid, phthalic acid, isophthalic acid, ring substituted phthalic acids or heterocyclic acids derived from furazane, thiofurazane, pyridine, and thio-phene, either alone or in admixture with each other. These polypiperazinamides are disclosed in U.S Patent Nos. 3 687 842; 3 743 596; 3 743 597; 3 696 031; 4 129 559 and 4 123 424.

The term "anisotropic shaped articles" refers to flat membranes and hollow fibres having a dense and homogeneous layer which makes possible a high repelling solute capacity, and an underlying porous layer acting as a support.

It is known tha polypiperazinamides are suitable for the preparation of anisotropic membranes with excellent salt-rejection characteristics as well as high water fluxes.

As is well known, the preparation process for such anisotropic membranes from polypiperazinamides consists in: preparing a solution of the polymer in an organic polar solvent, in the presence of a saline component; spreading the solution; partially evaporating the solvent by heating; coagulating the membrane in an aqueous coagulation medium; and, if deemed necessary, subjecting the membrane to a heat-treatment.

This process allows excellent anisotropic membranes to be obtained, but has some technological and cost drawbacks. In fact, the partial evaporation of the solvent from the spread solution involves a considerable waste of energy, the use of an oven of suitable size and, moreover, environmental pollution problems.

US—A—3 687 842 relates to an osmosis process utilizing as a semi-permeable membrane a polyamide comprising the reaction product of a piperazine with a dihalide of fumaric acid or of a substitued fumaric acid. Example 5 thereof describes preparing an RO-membrane of the gel-type according to the following procedure:

a) Preparing a solution of a poly(trans-2,5-dimethylpiperazinfumaramide) in a polar organic solvent consisting of a formamide-formic acid mixture;

b) Forming a film by spreading the solution over a glass plate maintained at 40°C;

c) immersing the glass plate in a mixture of water and ice and keeping them for 1 hour;

d) removing the film from the glass plate and keeping in water for 24 hours.

FR—A—2 166 115 discloses an anisotropic reverse osmosis membrane of a polypiperazinamide, prepared by a process comprising (1) preparing a solution of the polypiperazinamide in an organic water soluble aprotic polar solvent, (2) spreading a film of the solution on a smooth surface, (3) forming a membrane by the surface evaporation of the solvent, and (4) coagulating the membrane by immersion in a coagulating liquid.

The present invention accordingly aims to provide a process for the preparation of polypiperazinamide anisotropic shaped articles in the form of flat, tubular or hollow fibre membranes, not having the above indicated drawbacks.

The present invention provides a process for preparing a polypiperazinamide anisotropic shaped article, in the form of flat, tubular or hollow fibre membranes, comprising:

(a) preparing a solution of a polypiperazinamide in an organic polar solvent, the concentration of the polypiperazinamide solution being from 5% to 30% by weight, and the solvent for the preparation of a spinning solution being one miscible with water and selected from those belonging to classes $m$ and $s$ of the solvents forming hydrogen bonds ($m$-H and $s$-H bonding groups) and having a solubility parameter $\delta > 33.5$ $(J/cm^3)^{1/2}$;

(b) forming the solution into a shaped article by spreading the solution onto a flat or tubular support, or by extruding it through a spinneret for obtaining hollow fibres; and

(c) gelating the shaped article by phase inversion, by passage through a coagulating bath, characterized in that the coagulating bath is selected from polyfunctional alcohols, either alone or in admixture with water, and aqueous solutions of electrolytes; and

in that the said process in step (b) does not include a partial evaporation of solvent from the solution by heating.

Optionally, the process may further comprise an additional step of (d) heat treating the shaped article thus obtained.

The support may be suitably a glass or metal plate, fabric, or synthetic polymer film.

The various steps of the process of the invention will now be described in detail as follows.

Step (a): Preparation of the solution

The polypiperazinamide solution may be prepared according to known techniques. Thus, for instance, the solvent and polypiperazinamide mixture may be subjected to mechanical stirring with a simultaneous heating up to a temperature generally comprised from 20°C to the boiling or degradation temperature of the solvent, but preferably not exceeding 200°C. The solution thus obtained is then filtered through a porous membrane or other known filtering means.

The solvents used are organic polar solvents miscible with water and belonging to classes $m$ and $s$ of the solvents forming hydrogen bonds ($m$-H and $s$-H bonding groups) and having a solubility

parameter $\delta > 33.5$ $(J/cm^3)^{1/2}$ according to the classification given by H. Burrel in "Polymer Handbook", IV-340 to 348, J. Brandrup, E. N. Immergut, Editor, Interscience, N.Y. Some examples of such solvents are: dimethylformamide, dimethylacetamide, diethylformamide, diethylacetamide, dimethylsulphoxide, N-methylpyrrolidone, dioxane, acetic acid, and formic acid. Mixtures of such solvents may be used.

The concentraton of the polypiperazinamide in the solution ranges from 5% to 30% by weight, but it is preferably from 8% to 25% by weight with respect to the solution.

An inorganic salt or an organic substance, either solid or liquid, with a high boiling point, may also be added to the solution in an amount not exceeding 5% by weight with respect to the solution.

Step (b): Transformation of the solution into a shaped article

The solution obtained in step (a) is transformed into a shaped article either by spreading or by extrusion.

The spreading may be carried out in various ways: for example the solution may be spread onto a support by means of a film spreader, so as to form a thin layer of solution on the support.

As a support, any material may be used, such as for example a glass plate, a metal plate, a polyethylene-terephthalate film, and other materials, such as fabrics that may remain incorporated into the article thus forming a support for the membrane.

For producing a tubular-shaped membrane, the polypiperazinamide solution is extruded into the inner part of a tube used as a support.

For spreading the solution on the outside of a tube used as a support, this latter, closed at either one or at both ends, is dipped into the polypiperazinamide solution. Alternatively, the polypiperazinamide solution may be spread in a uniform way over the outside surface of the tube.

The thickness of the applied film may vary within a wide range and, generally, it is suitably from 0.02 to 0.8 mm.

The spinning of a solution produced in step (a) is carried out by extrusion through a spinneret provided with a plurality of holes, each one having an orifice for the feeding of the holemaker, and a concentric ring for the feeding of the polymeric solution.

The shaped articles thus obtained are hollow fibers with an outer diameter of from 0.080 mm to 1 mm and with an inner diameter of from 0.040 to 0.5 mm, depending on the use for which the hollow fibre is intended, that is in the field of reverse osmosis or in the field of ultrafiltration.

Step (c): Gelation of the shaped article by phase inversion

The shaped article obtained in step (b), in the form of a thin layer of solution spread over a flat or tubular support or in the form of hollow fibres, is immersed into a bath of a polymer non-solvent, miscible with the solvent used for the preparation of the solution, so as to cause gelation by phase inversion.

The selection of the non-solvent is of fundamental importance for the formation of anisotropic structures suitable for the uses intended for the membrane or hollow fibre.

Thus, for instance, water, although being a polymer non-solvent and miscible with the solvents in the preparation of the solution, confers an anisotropic structure with large fingers suitable for ultrafiltration or for low pressure processes.

Polymer non-solvents suitable for obtaining the best results in the formation of a dense layer for reverse osmosis are:

(1) polyfunctional alcohols such as ethyleneglycol, proplyeneglycol, or glycerin, either alone or in admixture with water, preferably in amounts not exceeding 20% by weight; or

(2) aqueous solutions of electrolytes such as alkaline or alkaline-earth metal halides, nitrates, or acetates, preferably in concentrations from 10 to 40% by weight.

In the case that the shaped article should be used in the field of ultrafiltration or low pressure processes, the suitable non-solvents may be aqueous solutions of polyfunctional alcohols, the water content of which is greater than 40% by weight, or aqueous solutions of electrolytes in concentrations not exceeding 10% by weight.

The bath containing the polymer non-solvent, in which the gelation occurs by phase inversion, may be suitably maintained at a temperature from $-20°C$ to $+40°C$, while the immersion time is suitably from 1 to 120 minutes.

In this phase asymmetric structure of the shaped articles is formed.

Step (d): Optional heat treatment

The membranes or shaped articles thus obtained sometimes do not yet have fully satisfactory reverse osmosis characteristics; for instance, the flux may be very high, for example 2500 $l/m^2 \cdot d$, but the saline rejection will be rather low, for example less than 50%, determined by using an aqueous saline solution containing 10,000 p.p.m. of NaCl, at a pressure of $6 \times 10^6$ Pa and at 20°C. In order to achieve, if desired, a considerable and lasting increase of the desalting properties of the membrane, this latter may be subjected to a heat treatment. The heat treatment may be carried out by several methods.

According to a preferred method, the membranes are first immersed in ethylene glycol at room temperature, for a period from 3 to 12 hours, and then they are kept in the same bath for a period of time from 1 to 120 minutes, more preferably from 10 to 60 minutes, at a temperature from 40°C to 100°C.

The ethylene glycol may be substituted by any other glycol or by glycerin.

The anisotropic membranes obtained according to the process of the present invention are characterized by saline rejection values which may even be greater than 99%, with flows equal to or greater than 600 l/m² · d, using an aqueous saline solution containing 10,000 p.p.m. of NaCl, at a pressure of 6 · 10⁶ Pa at 20°C.

The membranes obtained by the process of the invention, due to their polymeric structure, moreover exhibit a peculiar resistance to packing by the action of pressure which involves a long working time. This particular resistance to packing makes these membranes particularly suitable for the desalting of sea water, where higher pressures are required.

Moreover, the membranes obtained according to the process of the present invention are particularly effective in various separation and concentration processes in which reverse osmosis or ultrafiltration processes are applied such as in the purification of discharges of polluted waters; in inorganic or organic solute recovery; in the treatment of foodstuff such as milk, coffee, tea, citrus-juices, whey, tomato-juices, sugary solutions; in the separation of azeotropes; and in the concentration of biological and pharmaceutical products such as hormones, proteins, vitamins, antibiotics, vaccines, and aminoacids; and in other similar processes.

The process of the present invention makes it possible to completely avoid heat polymer solvent evaporation, with consequent energetical and environmental pollution advantages.

The invention will be further described with reference to the following illustrative Examples.

Example 1:
Preparation of a reverse osmosis membrane

17 g of poly(trans-2,5-dimethyl-piperazin-thiofurazanamide) having an $\eta_{in}$=2.78 (determined at 30°C with a solution of 0.5 g of polymer in 99.5 g of tetrachloroethane) were dissolved in 83 g of N-methylpyrrolidone. This mixture was heated for 30 minutes in an oven at 80°C, and was then kept under stirring for 1 hour at a temperature from 80°C to 150°C.

The resulting solution was then filtered under nitrogen pressure and degassed for about 8 hours.

The degassed solution was thereupon spread, at room temperature, over a glass plate to form a film having a thickness of 300 μm.

The film supporting glass plate was then immersed for 20 minutes in a glycerin bath at 20°C.

A part of the thus obtained membrane (Sample A) was immersed in water for about 1 hour. The remaining part of the membrane (Sample B) was immersed in ethylene glycol for 12 hours at room temperature and for a further 40 minutes at 80°C, and then it was immersed for 1 hour in distilled water, like Sample A.

Each membrane, A and B, was placed into a reverse osmosis cell of a standard type, in which was pumped an aqueous solution containing 10,000 p.p.m. of sodium chloride.

Each membrane was placed in its cell taking care that the face turned to the solution to be desalted was that not facing the glass plate during the spreading (positive side).

The saline rejection (SR) and the flux (F) obtained for Samples A and B, under a pressure of 6 · 10⁶ Pa, were:

|  | SR (%) | F (l/m² · d) |
|---|---|---|
| Sample A | 70 | 1,000 |
| Sample B | 98 | 700 |

Example 2:
Preparation of a reverse osmosis membrane

By following the procedure described in Example 1, a solution consisting of 20 g of poly(trans - 2,5 - dimethylpiperazin - thiofurazan-amide) and of 80 g of N-methylpyrrolidone was spread on a glass plate to form a film having a thickness of 300 μm.

The film supporting glass plate was immersed for 40 minutes in a glycerin bath at −10°C.

The membrane thus obtained was immersed in a ethylene glycol bath for 5 hours at room temperature and then for 30 minutes at 70°C, whereafter it was immersed in distilled water for one hour.

The saline rejection value (SR) and the flux (F) determined on the membrane thus obtained under the same conditions of Example 1, were:

$$SR=90\% \qquad F=600 \ l/m2 \cdot d.$$

Example 3:
Preparation of a supported membrane

A polymer solution, prepared according to the procedure of Example 1, was spread over a nonwoven fabric of polyester having a thickness of 100 μm, to form a film of 500 μm.

The film supporting fabric was immersed for 20 minutes in a glycerin bath at 20°C.

A part of the supported membrane thus obtained (Sample A) was immersed in distilled water for about one hour. The remaining part of the supported membrane (Sample B) was first immersed in an ethylene glycol bath for 8 hours at room temperature and for a further 40 minutes at 70°C, whereafter it was immersed in distilled water for about one hour.

The saline rejection value (SR) and the flux (F) of the Samples A and B were determined according to the method indicated in Example 1, and the obtained values were:

|  | SR (%) | F (l/m² · d) |
|---|---|---|
| Sample A | 75 | 900 |
| Sample B | 93 | 600 |

Example 4:
Preparation of an ultrafiltration membrane

Operating according to the procedure of Example 1, a solution consisting of 21 g of poly(trans-2,5-dimethylpiperazin-thiofurazanamide) having an $\eta_{in}$=1.71, and of 79 g of dimethyl-acetamide, was prepared.

The solution was spread, at room temperature, over a glass plate to form a 300 μm thick film.

The film supporting glass plate was immersed for 10 minutes in a bath consisting of 50% by weight of glycerin and 50% by weight of water.

The membrane thus obtained was immersed in water for about one hour.

The membrane was mounted in a cell for ultrafiltration, in which an aqueous solution containing 5000 p.p.m. of NaCl was circulated. Under a pressure of $5.10^5$ Pa, the flux was determined and found to be about 3000 l/m² · d.

Example 5:
Preparation of a ultrafiltration hollow fibre

Operating according to the procedure of Example 1, a solution was prepared consisting of:
—13 g of poly(trans-2,5-dimethyl-piperazin-thiofurazanamide), having an $\eta_{in}=2.8$;
—4 g of lithium nitrate; and
—83 g of N-methyl-pyrrolidone.

The solution was extruded at room temperature through a spinneret for hollow fibres, the holes of the spinneret having an outer diameter of 1 mm and an inner diameter of 0.5 mm. As generator of the holes was used isopropylmyristate fed at a rate of 0.75 cm³/min. The solution was fed at 0.7 cm³/min.

The fibres coming out of the spinneret were coagulated in a bath consisting of an aqueous 5% by weight solution of $CaCl_2$ and were wound up at a rate of 30 m/min.

The fibres thus obtained had an outer diameter of 200 μm and an inner diameter of 90 μm. the fibres were washed in water at room temperature for a few hours and then immersed for 3 hours in glycerin at room temperature.

By using a solution containing 5000 p.p.m. of NaCl and at a pressure of $5 · 10^5$ Pa, the flux value of the fibres was determined and found to be about 400 l/m² · d.

**Claims**

1. A process for preparing a polypiperazinamide anisotropic shaped article, in the form of a flat tubular or hollow fibre membranes, comprising:

(a) preparing a solution of a polypiperazinamide in an organic polar solvent, the concentration of the polypiperazinamide solution being from 5% to 30% by weight, and the solvent for the preparation of a spinning solution being one miscible with water and selected from those belonging to classes *m* and *s* of the solvents forming hydrogen bonds (*m*-H and *s*-H bonding groups) and having a solubility parameter δ>33.5 $(J/cm^3)^{1/2}$;

(b) forming the solution into a shaped article by spreading the solution onto a flat or tubular support, or by extruding it through a spinneret for obtaining hollow fibres; and

(c) gelating the shaped article by phase inversion, by passage through a coagulating bath, characterized in that the coagulating bath is selected from polyfunctional alcohols, either alone or in admixture with water, and aqueous solutions of electrolytes; and in that the said process in step (b) does not include partial evaporation of solvent from the solution by heating.

2. A process as claimed in claim 1, characterized in that the coagulating bath is a mixture of a polyfunctional alcohol and water in an amount not exceeding 20% by weight.

3. A process as claimed in claim 1, characterized in that the coagulating bath is a mixture of a polyfunctional alcohol and water in an amount greater than 40% by weight.

4. A process as claimed in claim 1, characterized in that the coagulating bath is an aqueous solution of electrolytes in concentrations of from 10 to 40% by weight.

5. A process as claimed in claim 1, characterized in that the coagulating bath is an aqueous solution of electrolytes in concentrations not exceeding 10% by weight.

6. A process as claimed in any of preceding claims 1 to 5, characterized in that the concentration of the polypiperazinamide solution is from 8% to 20% by weight.

7. A process as claimed in any of preceding claims 1 to 6, characterized if that the polypiperazinamide solution contains, in an amount not exceeding 5% by weight with respect to the solution, an inorganic salt or an organic compound with a high boiling point.

8. A process as claimed in any of preceding claims 1 to 7, characterized in that the coagulating bath is maintained at a temperature from −20°C to +40°C.

9. A process as claimed in any of claims 1 to 8, characterized by heat treatment of the shaped article thus obtained.

10. A process as claimed in claim 9, characterized in that the heat treatment is carried out by immersing the shaped article into a glycol or glycerin bath, keeping the bath first at room temperature for 3—12 hours, and then at a temperature from 40°C to 100°C for 1—120 minutes.

**Patentansprüche**

1. Verfahren zur Herstellung eines anisotropen, geformten Gegenstandes aus Polypiperazinamid in Form von flachen, rohrförmigen oder hohlen Fasermembranen, das umfaßt die

(a) Herstellung einer Lösung eines Polypiperazinamids in einem organischen polaren Lösungsmittel, wobei die Konzentration der Polypiperacinamidlösung von 5 bis 30 Gew.-% beträgt und das Lösungsmittel zur Herstellung einer Spinnlösung mit Wasser mischbar ist und ausgewählt ist aus den zu den Klassen *m* und *s* gehörenden Lösungsmitteln, die Wasserstoffbindungen bilden (*m*-H und *s*-H bindende Gruppen) und einen Löslichkeitsparameter δ>33,5 $(J/cm^3)^{1/2}$ haben;

(b) Bilden eines geformten Gegenstandes aus der Lösung durch Auftragen der Lösung auf einen flachen oder rohrförmigen Träger oder durch Strangpressen durch eine Spinndüse zur Erzielung hohler Fasern und

(c) Gelierung des geformten Gegenstandes durch Phaseninversion mittels Durchgang durch ein Koagulierungsbad, dadurch gekennzeichnet, daß das Koagulierungsbad ausgewählt ist aus polyfuntionellen Alkoholen, entweder allein oder in Mischung mit Wasser, und wässrigen Lösungen von Elektrolyten; und daß das Verfahren in Stufe (b) keine teilweise Abdampfung des Lösungsmittels aus der Lösung durch Erhitzen mitumfaßt.

2. Verfahren nach Anspruch 1, dadurch gekennzeichnet, daß das Koagulierungsbad eine Mischung von einem polyfunktionellen Alkohol und Wasser in einer Menge nicht über 20 Gew.-% ist.

3. Vefahren nach Anspruch 1, dadurch gekennzeichnet, daß das Koagulierungsbad eine Mischung von einem polyfunktionellen Alkohol und Wasser in einer Menge nicht größer als 40 Gew.-% ist.

4. Verfahren nach Anspruch 1, dadurch gekennzeichnet, daß das Koagulierungsbad eine wässrige Lösung von Elektrolyten in Konzentrationen von 10 bis 40 Gew.-% ist.

5. Verfahren nach Anspruch 1, dadurch gekennzeichnet, daß das Koagulierungsbad eine wässrige Lösung von Elektrolyten in Konzentrationen nicht über 10 Gew.-% ist.

6. Verfahren nach irgendeinem der vorhergehenden Ansprüche 1 bis 5, dadurch gekennzeichnet, daß die Konzentration der Polypiperazinamidlösung von 8 bis 20 Gew.-% beträgt.

7. Verfahren nach irgendeinem der vorhergehenden Ansprüche 1 bis 6, dadurch gekennzeichnet, daß die Polypiperazinamidlösung ein anorganisches Salz oder eine organische Verbindung mit einem hohen Siedepunkt in einer Menge nicht über 5 Gew.-%, bezogen auf die Lösung, enthält.

8. Verfahren nach irgendeinem der vorhergehenden Ansprüche 1 bis 7, dadurch gekennzeichnet, daß das Koagulierungsbad auf einer Temperatur von −20 bis +40°C gehalten wird.

9. Verfahren nach irgendeinem der Ansprüche 1 bis 8, gekennzeichnet, durch eine Wärmebehandlung des so erhaltenen geformten Gegenstandes.

10. Verfahren nach Anspruch 9, dadurch gekennzeichnet, daß die Wärmebehandlung durch Eintauchen des geformten Gegenstandes in ein Glykol- oder Glycerinbad durchgeführt wird, wobei das Bad zuerst 3 bis 12 h auf Zimmertemperatur und dann 1 bis 120 min auf einer Temperatur von 40 bis 100°C gehalten wird.

**Revendications**

1. Un procédé de préparation d'articles conformés anisotropes à base de polypipérazinamide sous la forme de membranes en fibres creuses, plates ou tubulaires consistant à:

(a) préparer une solution d'un polypipérazinamide dans un solvant organique polaire, la concentration de la solution de polypipérazinamide étant comprise entre 5 et 30% en poids et le solvant de préparation d'une solution de filature étant un solvant miscible à l'eau et choisi parmi ceux appartenant aux classes *m* et *s* des solvants formant des liaisons hydrogènes (groupes de liaison *m*-H et *s*-H) et présentant un paramètre de solubilité $\delta > 33,5$ $(J/cm^3)^{1/2}$;

(b) à former la solution en articles conformés par épandage de la solution sur un support plat ou tubulaire ou par extrusion de celui-ci à travers une filière pour obtenir des fibres creuses; et

(c) mise en gel de l'article conformé par inversion de phase pour passage à travers un bac de coagulation, caractérisé en ce que le bain de coagulation est choisi parmi des alcools polyfunctionnels, soit seuls, soit en mélange avec de l'eau, et des solutions aqueuses d'électrolyte et en ce que le procédé de l'étape (b) ne comprend pas une évaporation partielle du solvant à partir de la solution par chauffage.

2. Un procédé selon la revendication 1, caractérisé en ce que le bain de coagulation est un mélange d'alcool polyfonctionnel et d'eau en quantité ne dépassant pas 20% en poids.

3. Un procédé selon la revendication 1, caractérisé en ce que le bain de coagulation est un mélange d'alcool polyfonctionnel et d'eau en quantité ne dépassant pas 40% en poids.

4. Un procédé selon la revendication 1, caractérisé en ce que le bain de coagulation est une solution aqueuse d'électrolyte en concentration comprise entre 10 et 40% en poids.

5. Un procédé selon la revendication 1, caractérisé en ce que le bain de coagulation est une solution aqueuse d'électrolyte en concentration comprise entre 10% en poids.

6. Un procédé selon l'une quelconque des revendications précédentes 1 à 5, caractérisé en ce que la concentration de la solution de polypipérazinamide est comprise entre 8 et 20% en poids.

7. Un procédé selon l'une quelconque des revendications précédentes 1 à 6, caractérisé en ce que la polypipérazinamide contient, en quantité ne dépassant pas 5% en poids par rapport à la solution, un sel minéral ou un dérivé organique de point d'ébullition élevé.

8. Un procédé selon l'une quelconque des revendications précédentes 1 à 7, caractérisé en ce que le bain de coagulation est maintenu à une température de −20 à +40°C.

9. Un procédé selon l'une quelconque des revendications précédentes 1 à 8, caractérisé par le traitement à la chaleur de l'article conformé ainsi obtenu.

10. Un procédé selon la revendication 9, caractérisé en ce que le traitement à la chaleur est réalisé en immergeant l'article conformé dans un bain de glycol ou de glycérine, en maintenant le bain tout d'abord à une température ambiante pendant 3 à 12 heures et ensuite à une température de 40 à 100°C pendant 1 à 120 mn.